# EUROPÄISCHE PATENTSCHRIFT

(11) **EP 4 217 628 B1**
(45) Veröffentlichungstag und Bekanntmachung des Hinweises auf die Patenterteilung: **23.07.2025**
(21) Anmeldenummer: 21777470.2
(22) Anmeldetag: 13.09.2021
(51) Int. Cl.: B21B 13/00, F16J 15/3232, F16J 15/40, B21B 31/07

(54) **WALZANORDNUNG**
ROLLER ASSEMBLY
ENSEMBLE DE LAMINAGE

(30) Priorität: 28.09.2020 DE 102020212179
(43) Veröffentlichungstag der Anmeldung: 02.08.2023
(73) Patentinhaber: SMS group GmbH, 41069 Mönchengladbach (DE)
(72) Erfinder: ECKELSBACH, Holger, 40789 Monheim (DE); PEGGEN, Stefan, 41489 Wassenberg (DE)
(74) Vertreter: Kross, Ulrich
(86) Internationale Anmeldenummer: PCT/EP2021/075030
(87) Internationale Veröffentlichungsnummer: WO 2022/063615

(56) Entgegenhaltungen:
- EP-B1- 0 196 117
- EP-B1- 0 850 703
- DE-B3- 102018 104 123
- JP-A- 2005 040 799
- US-A- 3 892 446
- US-A- 4 910 987

## Beschreibung

Die Erfindung betrifft eine Walzanordnung mit zwei in einem Gehäuse gelagerten Walzenwellen, wobei die Walzenwellen vorzugsweise parallel zueinander gelagert sind, wobei die Walzenwellen jeweils in ihrem axialen Endbereich mindestens einen Walzring tragen, wobei am oder im Gehäuse eine Dichtungsanordnung befestigt ist, mit der der axiale Endbereich der Walzenwellen samt Walzringen gegen das Innere des Gehäuses abgedichtet werden kann, wobei die Dichtungsanordnung aufweist:
- eine Dichtungsträgerplatte, die am oder im Gehäuse befestigt ist oder Teil des Gehäuses ist,
- für jede Walzenwelle je zwei Gleitringe, die an der Walzenwelle angeordnet sind,
- für jede Walzenwelle je eine Doppellippendichtung mit zwei Dichtlippen, die an der Dichtungsträgerplatte (bzw. an einem in die Dichtungsträgerplatte angeordneten Spritzring, s. unten) angeordnet ist, wobei die Dichtlippen an je einem Gleitring anliegen, und
- für jede Walzenwelle je einen Stützring, der im radial innenliegenden Bereich der Doppellippendichtung angeordnet ist und diese radial abstützt.

Eine Walzanordnung der gattungsgemäßen Art ist aus der EP 0 850 703 B1 bekannt. Mit der Ausgestaltung von Dichtungsanordnungen beschäftigen sich auch die DE 10 2018 104 123 B3, die US 3 892 446 A, die US 4 910 987 A, die EP 0 196 117 B1 und die JP 2005 040799 A.

Die Dichtungsanordnungen einer solchen Walzanordnung werden im Betrieb, beispielsweise in einem Draht- oder Stabwalzwerk, stark beansprucht, was sich durch hohe und stark wechselnde Temperaturen, durch Verunreinigungen durch Schmutz und Zunder, durch den Einfluss durch Kühlwasser sowie durch hohe Reibungskräfte während des Betriebs ergibt. Die Dichtungsanordnungen müssen jeweils den Bereich der Walzringe gegen das Innere des Gehäuses abdichten, so dass zum einen kein Wasser bzw. Schmutz in das Gehäuse eintritt, zum anderen aber auch kein Öl aus dem Gehäuse austreten kann.

Somit tritt an den Dichtelementen der Dichtungsanordnung Verschleiß auf, der die Funktionsfähigkeit der Dichtungsanordnungen beeinträchtigt und einen häufigen Wechsel der Dichtungen erfordert.

Der zeitliche Aufwand für das Wechseln der Dichtelemente ist dabei sehr hoch. Bekannt sind Doppellippendichtungen, die mit einem Federstahlring, einem Kunststoffring oder einem ähnlichen Spannelement versehen sind, um die Dichtfunktion im Betrieb zu gewährleisten und eine Rotationsbewegung relativ zu einer Dichtungsträgerplatte zu unterbinden. Die Spannkraft des Federstahlrings bzw. Kunststoffrings zur Befestigung der Dichtung erfordert bei der Enge der Einbausituation und durch die erforderliche Verformung des Spannrings während der Montage die Demontage des Dichtungsträgers und der sonstigen daran befestigten Armaturen (Führungen, Führungshalter, Kühlrohre, etc.). Bekannte Spannelemente, die eine geringere Verformung benötigen und damit die Montage der Dichtung ohne Demontage des Dichtungsträgers ermöglichen, bringen nicht ausreichend radiale Kraft auf, um ein Mitdrehen der Doppellippendichtung relativ zur Dichtungsträgerplatte zu unterbinden; hoher Verschleiß und Ausfall der Dichtung sind die Folge.

Das Wechseln der Dichtelemente stellt daher einen erheblichen Kostenblock dar. Die Standzeit der Dichtung liegt typischerweise im Bereich von drei bis vier Wochen, stark abhängig vom Einsatz. Für das Wechseln der Dichtelemente wird pro Dichtungsstelle eine Zeit im Bereich von ca. 30 Minuten angesetzt, was sich infolge der Anzahl der Walzgerüst (z. B. 10-gerüstiger Walzblock mit 20 Dichtungen) bei einem gegebenen Stundensatz der Anlage über das Jahr zu einem beträchtlichen Kostenvolumen aufsummiert.

Der Erfindung liegt die **Aufgabe** zugrunde, eine Walzanordnung der eingangs genannten Art so fortzubilden, dass es möglich ist, bei Verschleiß in der Dichtungsanordnung diese in wesentlich kürzerer Zeit als bisher warten und insbesondere Dichtungen ersetzen zu können. Der hierfür erforderliche Demontage- und Montageaufwand soll reduziert und dadurch entsprechende Kosten eingespart werden können. Die Wechselzeiten sollen damit ohne Beeinträchtigung der Standzeit der Dichtung reduziert werden können.

Die **Lösung** dieser Aufgabe durch die Erfindung ist dadurch gekennzeichnet, dass eine Verdrehsicherung angeordnet ist, mit der eine Drehung der Doppellippendichtung relativ zur Dichtungsträgerplatte unterbunden wird, wobei die Verdrehsicherung mindestens einen (vorzugsweise genau einen) an der Dichtungsträgerplatte (oder am Spritzring) angeordneten radialen Vorsprung umfasst, der in eine korrespondierende Ausnehmung in der Doppellippendichtung eingreift, oder wobei die Verdrehsicherung mindestens einen (vorzugsweise genau einen) an der Doppellippendichtung angeordneten radialen Vorsprung umfasst, der in eine korrespondierende Ausnehmung in der Dichtungsträgerplatte (bzw. in den Spritzring) eingreift, wobei der Vorsprung und die Ausnehmung kongruent zueinander ausgebildet sind und wobei der Vorsprung als Zylinder oder Stift ausgebildet ist.

Die vorgeschlagene Lösung ermöglicht es, wie nachfolgend noch gesehen werden kann, dass die Demontage der Doppellippendichtung bei der Demontage nur eines der beiden Gleitringe möglich ist.

Der Stützring ist nach einer Ausführungsform der Erfindung als separates Bauteil ausgebildet; er kann alternativ aber auch in die Doppellippendichtung integriert sein. Der Stützring ist dabei insbesondere so ausgestaltet, dass er zur Montage nicht oder nur so gering verformt werden muss, dass die Montage des Stützringes bei Demontage nur eines der beiden Gleitringe möglich ist.

Die Doppellippendichtung ist vorzugsweise frei von sonstigen Versteifungselementen. Damit ist sie bei der Montage sehr elastisch und kann bei Demontage nur eines der beiden Gleitringe montiert werden.

Die Doppellippendichtung und der Stützring sind vorzugsweise so zueinander toleriert, dass im montierten Zustand eine radial nach außen gerichtete Kraft vom Stützring auf die Doppellippendichtung ausgeübt wird. Demgemäß wird die Stabilität der axialen Position der Doppellippendichtung im Betrieb nicht durch diese selber, sondern durch den Stützring bewerkstelligt.

Der Stützring hat vorzugsweise zumindest an einem axialen Endbereich eine Fase. Dies erleichtert die Montage wesentlich und schließt Beschädigungen der Doppellippendichtung und des Stützrings bei der Montage aus.

Der Stützring ist bevorzugt als Stahlring ausgebildet, er kann jedoch auch aus anderen Materialien gefertigt sein, welche geeignet sind, den Betriebs- und Umweltbedingungen in ähnlicher Form zu widerstehen. Durch die Verwendung eines geeigneten Materials wird die mehrfache Wiederverwendbarkeit des Stützringes für die Montage weiterer Dichtungen ermöglicht, sofern der Stützring nicht in die Doppellippendichtung integriert ist.

Die radiale Dicke des Stützrings hängt von der Größe der Dichtungen ab. Bei einer möglichen Ausgestaltung der Erfindung beträgt die radiale Dicke des Stützrings zwischen 1 mm und 10 mm, besonders bevorzugt zwischen 2 mm und 5 mm.

Die Dichtungsträgerplatte ist bevorzugt mit einer Einrichtung zur Zufuhr von Sperrwasser oder Sperrluft versehen. Hiernach ist ein Spritzring in die Dichtungsträgerplatte eingebaut oder ein solcher in die Dichtungsträgerplatte integriert.

Die Walzanordnung ist bevorzugt Bestandteil eines Draht- oder Stabwalzgerüsts. Die vorgeschlagene Dichtungsanordnung kommt also, ausgebildet als Gleitringdichtung, vorzugsweise in Walzmodulgehäusen in metallurgischen Anlagen, insbesondere in Draht- und Stabwalzwerken, zum Einsatz.

Dabei befinden sich in einer üblichen Anlagenkonfiguration im Bereich eines Drahtwalzblockes, in dem das Walzprodukt auf die Endabmessungen gewalzt wird, typischerweise zehn Gerüste. In jedem der Gerüste befindet sich die Dichtungsträgerplatte mit zwei Spritzringen und zwei Doppellippendichtungen. In der Dichtungsträgerplatte sind Ausnehmungen für die Doppellippendichtungen vorgesehen, die aufgrund der parallelen Anordnung der beiden Walzenwellen die Form einer "Acht" aufweisen.

Die vorgeschlagene Lösung erlaubt eine erhebliche Reduzierung der Zeit für das Wechseln der Doppellippendichtung. Vorteilhaft ist, dass bei dem Wechseln der Dichtung auf die Demontage der Dichtungsträgerplatte verzichtet werden kann, so dass auch vorhandene Armaturen an der Platte (Führungen, Führungshalter, Kühlrohre, etc.) nicht abgebaut werden müssen.

Durch die vorgesehene Verdrehsicherung (d. h. die Rotation der Doppellippendichtung relativ zur Dichtungsträgerplatte ist ausgeschlossen) wird sichergestellt, dass der Verschleiß an der Dichtung gering bleibt und die Dichtfunktion gewährleistet wird. Ohne eine solche Sicherung würde durch ein Mitdrehen der Dichtung Reibung und Wärme entstehen, die die Dichtung schädigt und zu vorzeitigen Ausfällen führt.

Es ergeben sich somit wesentlich reduzierte Stillstandszeiten und somit ein Kostenvorteil für den Betreiber der Walzanlage. Ferner werden auch die Wartungskosten wesentlich reduziert.

Somit ergibt sich die Möglichkeit eines schnellen Wechsels der Dichtung bei montierter Dichtungsträgerplatte. Im Vergleich mit vorbekannten Lösungen lässt sich die Zeit für das Wechseln der Dichtung deutlich reduzieren, ohne dass eine Reduzierung der Standzeit der Dichtung gegeben wäre.

Der zum Einsatz kommende Stützring ist bevorzugt aus Stahl gefertigt und stellt sicher, dass eine ausreichende Spannkraft im Betrieb gegeben ist, die die Doppellippendichtung zuverlässig in axialer Position hält, so dass eine effektive Dichtwirkung gegeben ist. Nach dem Wechsel der Doppellippendichtung wird der Stützring an derselben Dichtungsstelle wieder verwendet, sofern der Stützring nicht in die Doppellippendichtung integriert ist. Die Wiederverwendbarkeit des Stützringes reduziert die Materialkosten der Wartung.

Die Ausstattung des Stützrings mit einer Fase ermöglicht die Montage ohne hohen Kraftaufwand und ohne Beschädigung der Dichtung oder des Stützrings.

Wenn vorliegend von der Doppellippendichtung gesprochen wird, ist hierunter zu verstehen, dass besagtes Dichtungselement mindestens zwei Dichtlippen aufweist, von denen jeweils eine an einem Gleitring anläuft. Dies bedeutet allerdings nicht, dass nicht noch weitere Dichtlippen an der Doppellippendichtung angeordnet sein können.

In der Zeichnung ist ein Ausführungsbeispiel der Erfindung dargestellt. Es zeigen:
- Fig. 1: den Endbereich einer Walzenwelle eines Drahtwalzgerüst, welche in einem Gehäuse gelagert ist, in deren axialen Endbereich ein Walzring montiert ist, wobei eine Dichtungsanordnung zwischen dem Walzring und dem Gehäuse wirksam angeordnet ist,
- Fig. 2: eine vergrößerte Darstellung der Dichtungsanordnung und
- Fig. 3: die Einzelheit "X" gemäß Figur 2.

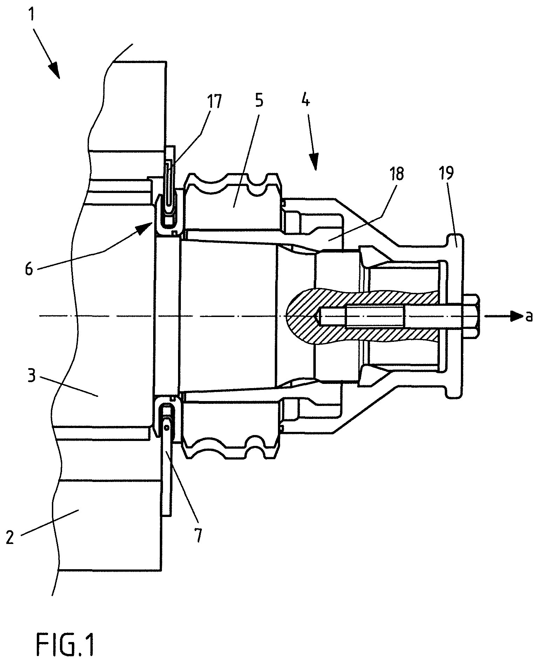

In Figur 1 ist ein Teil einer Walzanordnung 1 zu sehen, die Bestandteil eines Draht- oder Stabwalzwerks ist. Dabei ist eine Walzenwelle 3 in einem Gehäuse 2 gelagert. Nicht dargestellt ist, dass in dem Gehäuse 2 zwei benachbart angeordnete Walzenwellen 3 gelagert sind, wobei die beiden Walzenwellen parallel zueinander angeordnet sind, d. h. die Achsen a der Walzenwellen sind parallel.

Im axialen Endbereich 4 einer jeden Walzenwelle 3 ist je ein Walzring 5 angeordnet, der zum Walzen des Guts dient, d. h. das zu walzende Gut wird zwischen zwei zusammenwirkenden Walzringen 5 gewalzt. Der Walzring 5 ist mittels einer Konushülse 18 auf dem Zapfen der Walzenwelle 3 festgelegt, wozu weiterhin eine Kappe 19 dient, die mittels einer Schraube im Endbereich der Walzenwelle 3 befestigt ist.

Damit das Innere des Gehäuses 2 gegen den Walzbereich mit den Walzringen 5 abgedichtet ist, so dass sowohl keine Verunreinigungen in das Innere des Gehäuses eindringen können als auch kein Öl aus dem Gehäuse austreten kann, ist eine Dichtungsanordnung 6 vorgesehen, die als Gleitringdichtung ausgebildet ist.

Die Dichtungsanordnung 6 umfasst eine Dichtungsträgerplatte 7, die am Gehäuse 2 festgeschraubt ist. Die Dichtungsträgerplatte 7 ist auch mit einer Sperrwasser-oder Sperrluftzufuhr 17 versehen, d. h. integraler Bestandteil der Dichtungsträgerplatte ist ein Spritzring, mit dem Sperrwasser oder Sperrluft in Richtung auf den Walzring 5 zu ausgebracht werden kann.

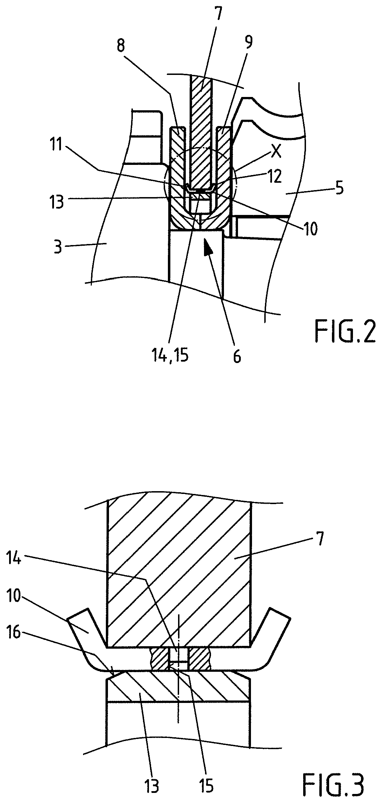

Die genaue Ausgestaltung der Dichtungsanordnung 6 geht aus den Figuren 2 und 3 hervor.

Hieraus ergibt sich, dass die Dichtungsanordnung 6 zunächst pro Dichtungsstelle zwei Gleitringe 8 und 9 umfasst, die in der dargestellten Weise montiert sind und die zusammen im Radialschnitt eine im wesentlichen U-förmige Struktur bilden. An der Dichtungsträgerplatte 7 ist eine Doppellippendichtung 10 befestigt, die zwei Dichtlippen 11 und 12 aufweist. Die eine Dichtlippe 11 liegt dabei im montierten Zustand reibend am Gleitring 8 an, die Dichtlippe 12 reibend am Gleitring 9.

Die Doppellippendichtung 10 ist dabei ohne jegliches Verstärkungselement ausgeführt, so dass eine leicht verformbare und damit auch gut zu montierende Struktur vorliegt. Die Stabilität der Doppellippendichtung 10 in Betrieb der Walzanordnung 1 wird durch einen Stützring 13 bewerkstelligt, wie er am besten aus Figur 3 ersichtlich ist. Bei dem Stützring 13 handelt es sich um einen dünnwandigen Stahlring, der an seinem einen axialen Ende mit einer Fase 16 versehen ist.

Damit im Betrieb der Anlage die Doppellippendichtung 10 nicht (um die Achse a) relativ zur Dichtungsträgerplatte 7 drehen kann, ist eine Verdrehsicherung 14, 15 vorgesehen, wie sie am besten aus Figur 3 ersichtlich ist.

Hiernach weist die Dichtungsträgerplatte 7 an einer Umfangsstelle einen sich in radiale Richtung erstreckenden Vorsprung 14 in Form eines Stifts bzw. Zylinders auf, der in eine kongruente Ausnehmung 15 in der Doppellippendichtung 10 eingreift. Somit ist eine relative Drehung um die Achse a zwischen der Dichtungsträgerplatte 7 und der Doppellippendichtung 10 verhindert.

Muss die Doppellippendichtung 10 infolge Verschleißes ausgetauscht werden, kann dies in wesentlich einfacherer und kürzerer Weise erfolgen, als dies bei vorbekannten Lösungen der Fall ist.

Das Verfahren des Austausches der Doppellippendichtung 10 läuft wie folgt ab:
Zunächst wird die Kappe 19 abgeschraubt, die Konushülse 18 entfernt und der Walzring 5 abgenommen. Dann wird der außenliegende Gleitring 9 in axiale Richtung abgezogen.

Nun wird der Stützring 13 in axiale Richtung abgezogen, so dass die Doppellippendichtung 10 zugänglich ist; sie wird entnommen, was infolge ihrer Freiheit von Verstärkungselementen problemlos ist.

Eine neue Doppellippendichtung 10 wird unter Berücksichtigung der Übereinstimmung von Vorsprung und Ausnehmung eingesetzt. Sowohl die Dichtungsträgerplatte 7 als auch der innere Gleitring 8 verbleiben in montiertem Zustand.

Ist die neue Doppellippendichtung 10 eingesetzt, wird der Stützring 13 wieder aufgeschoben, wobei die Fase 16 eine leichtgängige Montage ermöglicht und sicherstellt, dass an der Doppellippendichtung 10 keine Beschädigung auftritt. Der Stützring 13 hält die Doppellippendichtung 10 stabil in der vorgesehenen Betriebsposition und übt eine radial nach außen wirkende Kraft auf die Doppellippendichtung 10 aus, so dass diese zuverlässig an der Dichtungsträgerplatte 7 gehalten wird.

Nunmehr wird der äußere Gleitring 9 wieder aufgeschoben und dann die weiteren Bauteile (Walzring 5, Konushülse 18 und Kappe 19) wieder montiert.

Der Zeitbedarf hierfür beträgt nur ein Bruchteil dessen, was bislang üblich ist, da insbesondere die Dichtungsträgerplatte 7 mit den sich daran befindlichen Anbauten und Armaturen nicht demontiert werden muss.

Somit bietet die vorgeschlagene Anordnung infolge des beschriebenen vereinfachten Demontage- und Montageverfahrens eine wesentliche Erhöhung der Produktivität der Walzanlage, die in herkömmlicher Weise nicht erreicht werden kann.

### Bezugszeichenliste:

- 1: Walzanordnung
- 2: Gehäuse
- 3: Walzenwelle
- 4: axialer Endbereich
- 5: Walzring
- 6: Dichtungsanordnung
- 7: Dichtungsträgerplatte
- 8: Gleitring
- 9: Gleitring
- 10: Doppellippendichtung
- 11: Dichtlippe
- 12: Dichtlippe
- 13: Stützring
- 14, 15: Verdrehsicherung
- 14: Vorsprung (Zylinder / Stift)
- 15: Ausnehmung
- 16: Fase
- 17: Sperrwasserzufuhr / Sperrluftzufuhr
- 18: Konushülse
- 19: Kappe

- a: Achse

## Patentansprüche

1. Walzanordnung (1) mit zwei in einem Gehäuse (2) gelagerten Walzenwellen (3), wobei die Walzenwellen (3) vorzugsweise parallel zueinander gelagert sind, wobei die Walzenwellen (3) jeweils in ihrem axialen Endbereich (4) mindestens einen Walzring (5) tragen, wobei am oder im Gehäuse (2) eine Dichtungsanordnung (6) befestigt ist, mit der der axiale Endbereich (4) der Walzenwellen (3) samt Walzringen (5) gegen das Innere des Gehäuses (2) abgedichtet werden kann, wobei die Dichtungsanordnung (6) aufweist:
- eine Dichtungsträgerplatte (7), die am oder im Gehäuse (2) befestigt ist oder Teil des Gehäuses (2) ist,
- für jede Walzenwelle (3) je zwei Gleitringe (8, 9), die an der Walzenwelle (3) angeordnet sind,
- für jede Walzenwelle (3) je eine Doppellippendichtung (10) mit zwei Dichtlippen (11, 12), die an der Dichtungsträgerplatte (7) angeordnet ist, wobei die Dichtlippen (11, 12) an je einem Gleitring (8, 9) anliegen, und
- für jede Walzenwelle (3) je einen Stützring (13), der im radial innenliegenden Bereich der Doppellippendichtung (10) angeordnet ist und diese radial abstützt,
**dadurch gekennzeichnet,**
**dass** eine Verdrehsicherung (14, 15) angeordnet ist, mit der eine Drehung der Doppellippendichtung (10) relativ zur Dichtungsträgerplatte (7) unterbunden wird, und wobei die Verdrehsicherung (14, 15) mindestens einen an der Dichtungsträgerplatte (7) angeordneten radialen Vorsprung (14) umfasst, der in eine korrespondierende Ausnehmung (15) in der Doppellippendichtung (10) eingreift, oder wobei die Verdrehsicherung (14, 15) mindestens einen an der Doppellippendichtung (10) angeordneten radialen Vorsprung umfasst, der in eine korrespondierende Ausnehmung in der Dichtungsträgerplatte (7) eingreift, wobei der Vorsprung und die Ausnehmung kongruent zueinander ausgebildet sind und wobei der Vorsprung als Zylinder oder Stift ausgebildet ist.

2. Walzanordnung nach Anspruch 1, **dadurch gekennzeichnet, dass** der Stützring (13) als separates Bauteil ausgebildet oder in die Doppellippendichtung (10) integriert ist.

3. Walzanordnung nach Anspruch 1 oder 2, **dadurch gekennzeichnet, dass** die Doppellippendichtung (10) frei von Versteifungselementen ist.

4. Walzanordnung nach einem der Ansprüche 1 bis 3, **dadurch gekennzeichnet, dass** die Doppellippendichtung (10) und der Stützring (13) so zueinander toleriert sind, dass im montierten Zustand eine radial nach außen gerichtete Kraft vom Stützring (13) auf die Doppellippendichtung (10) ausgeübt wird.

5. Walzanordnung nach einem der Ansprüche 1 bis 4, **dadurch gekennzeichnet, dass** der Stützring (13) zumindest an einem axialen Endbereich eine Fase (16) aufweist.

6. Walzanordnung nach einem der Ansprüche 1 bis 5, **dadurch gekennzeichnet, dass** der Stützring (13) als Stahlring ausgebildet ist.

7. Walzanordnung nach einem der Ansprüche 1 bis 6, **dadurch gekennzeichnet, dass** die Dichtungsträgerplatte (7) mit einer Einrichtung zur Zufuhr von Sperrwasser oder Sperrluft versehen ist.

8. Walzanordnung nach einem der Ansprüche 1 bis 7, **dadurch gekennzeichnet, dass** sie Bestandteil eines Draht- oder Stabwalzgerüsts ist.

## Claims

1. Roller assembly (1) with two roller shafts (3) mounted in a housing (2), wherein the roller shafts (3) are preferably mounted parallel to one another, wherein the roller shafts (3) each carry at least one roller ring (5) in their axial end region (4), wherein a seal assembly (6), by which the axial end region (4) of the roller shafts (3) together with roller rings (5) can be sealed relative to the interior of the housing (2), is secured at or in the housing (2), wherein the sealing assembly (6) comprises:
- a seal support plate (7), which is secured at or in the housing (2) or is part of the housing (2),
- two respective slide rings (8, 9) for each roller shaft (3), the slide rings being arranged at the roller shaft (3),
- a respective double lip seal (10) for each roller shaft (3), the double lip seal having two sealing lips (11, 12) and being arranged at the seal support plate (7), wherein the sealing lips (11, 12) each bear against a respective slide ring (8, 9), and
- a respective support ring (13) for each roller shaft (3), the support ring being arranged in the radially inwardly disposed region of the double lip seal (10) and radially supporting this,
**characterised in that**
rotation prevention means (14, 15), by which rotation of the double lip seal (10) relative to the seal support plate (7) is prevented, is arranged, wherein the rotation prevention means (14, 15) comprises at least one radial projection (14) which is arranged at the seal support plate (7) and engages in a corresponding recess (15) in the double lip seal (10) or wherein the rotation prevention means (14, 15) comprises at least one radial projection which is arranged at the double lip seal (10) and engages in a corresponding recess in the seal support plate (7), wherein the projection and the recess are formed to be congruent with one another and wherein the projection is configured as a cylinder or pin.

2. Roller assembly according to claim 1, **characterised in that** the support ring (13) is constructed as a separate component or is integrated in the double lip seal (10).

3. Roller assembly according to claim 1 or 2, **characterised in that** the double lip seal (10) is free of stiffening elements.

4. Roller assembly according to any one of claims 1 to 3, **characterised in that** the double lip seal (10) and the support ring (13) are so toleranced relative to one another that in the mounted state a radially outwardly directed force is exerted by the support ring (13) on the double lip seal (10).

5. Roller assembly according to any one of claims 1 to 4, **characterised in that** the support ring (13) has a chamfer (16) at least at an axial end region.

6. Roller assembly according to any one of claims 1 to 5, **characterised in that** the support ring (13) is constructed as a steel ring.

7. Roller assembly according to any one of claims 1 to 6, **characterised in that** the seal support plate (7) is provided with a device for the feed of sealing water or sealing air.

8. Roller assembly according to any one of claims 1 to 7, **characterised in that** it is a component of a wire or rod roll stand.

## Revendications

1. Ensemble de cylindres (1), comportant deux arbres de cylindre (3) montés dans un boîtier (2), lesdits arbres de cylindre (3) étant de préférence montés parallèlement l'un à l'autre, chaque arbre de cylindre (3) portant au moins une bague de laminage (5) dans sa zone d'extrémité axiale (4), un ensemble d'étanchéité (6) étant fixé sur ou dans le boîtier (2) qui permet d'étanchéifier la zone d'extrémité axiale (4) des arbres de cylindre (3) ainsi que les bagues de laminage (5) par rapport à l'intérieur du boîtier (2), l'ensemble d'étanchéité (6) comprenant :
• une plaque porte-joint (7) fixée sur ou dans le boîtier (2), ou faisant partie du boîtier (2),
• pour chaque arbre de cylindre (3), deux bagues de glissement (8, 9) disposées sur l'arbre de cylindre (3),
• pour chaque arbre de cylindre (3), un joint à double lèvre (10) comportant deux lèvres d'étanchéité (11, 12), ledit joint étant disposé sur la plaque porte-joint (7), les lèvres d'étanchéité (11, 12) venant respectivement en appui contre l'une des deux bagues de glissement (8, 9), et
• pour chaque arbre de cylindre (3), une bague de support (13) disposée dans la zone radialement interne du joint à double lèvre (10) et soutenant radialement ce dernier,
**caractérisé en ce qu'**un dispositif anti-rotation (14, 15) est prévu, lequel empêche une rotation du joint à double lèvre (10) par rapport à la plaque porte-joint (7), et le dispositif anti-rotation (14, 15) comprend au moins une saillie radiale (14) disposée sur la plaque porte-joint (7) et s'engageant dans un évidement correspondant (15) pratiqué dans le joint à double lèvre (10), ou le dispositif anti-rotation (14, 15) comprend au moins une saillie radiale disposée sur le joint à double lèvre (10) et s'engageant dans un évidement correspondant pratiqué dans la plaque porte-joint (7), la saillie et l'évidement étant formés de manière congruente, la saillie étant réalisée sous forme de cylindre ou de goupille.

2. Ensemble de cylindres selon la revendication 1, **caractérisé en ce que** la bague de support (13) est réalisée comme pièce distincte ou est intégrée dans le joint à double lèvre (10).

3. Ensemble de cylindres selon la revendication 1 ou 2, **caractérisé en ce que** le joint à double lèvre (10) est dépourvu d'éléments de rigidification.

4. Ensemble de cylindres selon l'une quelconque des revendications 1 à 3, **caractérisé en ce que** le joint à double lèvre (10) et la bague de support (13) sont ajustés l'un par rapport à l'autre de telle manière qu'une force radiale dirigée vers l'extérieur est exercée par la bague de support (13) sur le joint à double lèvre (10) à l'état monté.

5. Ensemble de cylindres selon l'une quelconque des revendications 1 à 4, **caractérisé en ce que** la bague de support (13) présente au moins à une extrémité axiale un chanfrein (16).

6. Ensemble de cylindres selon l'une quelconque des revendications 1 à 5, **caractérisé en ce que** la bague de support (13) est réalisée sous forme d'anneau en acier.

7. Ensemble de cylindres selon l'une quelconque des revendications 1 à 6, **caractérisé en ce que** la plaque porte-joint (7) est équipée d'un dispositif d'alimentation en eau de barrage ou en air de barrage.

8. Ensemble de cylindres selon l'une quelconque des revendications 1 à 7, **caractérisé en ce qu'il** fait partie d'un train de laminoirs pour fils ou barres.
